# EUROPÄISCHE PATENTSCHRIFT

(11) **EP 3 296 104 B1**
(45) Veröffentlichungstag und Bekanntmachung des Hinweises auf die Patenterteilung: **20.11.2019**
(21) Anmeldenummer: 17191247.0
(22) Anmeldetag: 15.09.2017
(51) Int. Cl.: B32B 15/01, B21D 22/02, C21D 8/02, C21D 9/46, C21D 1/18, C22C 38/00, C22C 38/02, C22C 38/04, C22C 38/06, C22C 38/18, C22C 38/28, C22C 38/32, B21D 22/26, C21D 8/00

(54) **VERFAHREN ZUR HERSTELLUNG EINES KAROSSERIEBAUTEILS MIT REDUZIERTER RISSNEIGUNG**
METHOD FOR PRODUCING A BODYWORK COMPONENT WITH REDUCED CRACKING
PROCÉDÉ DE FABRICATION D'UN ÉLÉMENT DE CARROSSERIE À TENDANCE RÉDUITE À LA FISSURATION

(30) Priorität: 16.09.2016 DE 102016117474
(43) Veröffentlichungstag der Anmeldung: 21.03.2018
(73) Patentinhaber: Benteler Automobiltechnik GmbH, 33102 Paderborn (DE)
(72) Erfinder: Frost, Georg, 32839 Steinheim (DE); Kettler, Markus, 33189 Schlangen (DE); Bake, Karsten, 33129 Delbrück (DE)
(74) Vertreter: Ksoll, Peter

(56) Entgegenhaltungen:
- EP-A1- 2 886 332
- WO-A1-2017/016536
- DE-A1-102014 114 365
- DE-A1-102014 116 695
- DE-B3-102016 114 062
- DE-B3-102016 114 068
- US-A1- 2013 180 305
- US-A1- 2016 017 452

## Beschreibung

Die Erfindung betrifft ein Verfahren zur Herstellung eines Karosseriebauteils aus Manganstahlblech.

Karosseriebauteile werden heute überwiegend aus Stahlblech, sowie aus Aluminium als Strangpressprofil, und als Gussbauteil aus metallischen Legierungen erzeugt.

Die immer höheren Anforderungen an geringeren Kraftstoffverbrauch und Fahrzeugemission führen dazu, dass Fahrzeuge leichter werden müssen trotz gleichzeitig gestiegener Sicherheits- und Komfortanforderungen. Daher haben sich neben hochpreisigen Aluminiumlegierungen besonders Manganstahlbleche für den Leichtbau etabliert. Diese lassen sich durch Formhärten auf hohe Festigkeit bringen, indem sie durch Blechzuschnitt, Erwärmen auf Härtetemperatur sowie Umformen und Härten verarbeiten werden. Dieser Prozess ist auch als Warmformen bekannt. Zum Warmformen eignen sich Manganstähle mit einem Kohlenstoffgehalt zwischen 0,15 und 0,40 Gewichtsprozent.

Nachteilig ist, dass die formgehärteten Bauteile hohe Rissneigung aufweisen können, und die Prozessparameter, wie insbesondere die Aufheizrate beim Erwärmen oder die Abkühlrate beim Formhärten, dadurch limitiert sind.

Die US 2016/0017452 A1 betrifft ein kaltgewalztes Blech, das zur Herstellung von pressgehärteten Teilen geglüht und vorbeschichtet wird. Das Blech besteht aus einem Stahlsubstrat mit einem Kohlenstoffgehalt zwischen 0,07 % und 0,5 %, wobei das Stahlsubstrat auf der Oberfläche jeder seiner beiden Hauptfläche eine entkarbonisierte Zone besitzt. Wesentlich ist, dass das Metallblech keine Eisenoxidschicht zwischen dem Stahlsubstrat und der Metallvorbeschichtung enthält.

Ein Flachstahlprodukt für Karosseriebauteile geht aus der US 2013/0180305 A1 hervor. Dieses besteht aus einem Manganstahlblech und besitzt eine duktile Außenlage mit einem reduzierten Kohlenstoffgehalt.

Die DE 10 2014 114 365 A1betrifft ein mehrschichtiges Stahlflachprodukt bestehend aus einer Mehrzahl miteinander verbundener Stahllegierungsschichten, wobei in mindestens einer der Stahllegierungsschichten ein Stahl einer ersten Stahllegierung und in mindestens einer anderen der Stahllegierungsschichten ein Stahl einer zweiten Stahllegierung, die von der ersten Stahllegierung verschieden ist, vorgesehen ist.

Die DE 10 2014 116 695 A1offenbar ein Karosseriebauteil aus einem dreilagigen Blechverbund mit einer Mittellage und zwei die Mittellage nach außen begrenzenden Außenlagen. Die Außenlagen bestehen aus einer ferritischen Stahllegierung und die Mittellage besteht aus einer vergütbaren Stahllegierung.

Ferner zählt durch die EP 2 886 332 A1ein Stahlflachprodukt zum Stand der Technik. Das Stahlflachprodukt besitzt eine Kernlage und eine stoffschlüssig mit der Kernlage verbundene Decklage. Die Kernlage besteht aus einem Manganbohrstahl. Der Kohlenstoffgehalt der Decklage soll höchstens 0,13 Gew.-% betragen. Das Stahlflachprodukt weist im Bereich der Decklage eine Zugfestigkeit auf, die höchstens der Hälfte der Zugfestigkeit des Stahls der Kernlage im fertig gehärteten Zustand entspricht.

Der Erfindung liegt die Aufgabe zugrunde, ein Verfahren zur Herstellung eines Karosseriebauteils mit hoher Festigkeit und geringerer Rissneigung aufzuzeigen.

Diese Aufgabe wird durch ein Vefahren gemäß Anspruch 1 gelöst, wobei die nachfolgenden Unteransprüche vorteilhafte Weiterbildungen dieses Verfahrens darstellen.

Es wird ein Karosseriebauteil aus Manganstahlblech vorgeschlagen, welches durch Formhärten hergestellt ist, umfassend eine Hauptlage mit einem Kohlenstoffgehalt in Gewichtsprozent von 0,15 - 0,40.

Das Karosseriebauteil weist eine Außenlage mit einer Lagendicke zwischen 10 und 100 Mikrometern sowie einen um wenigstens 10 Prozent gegenüber der Hauptlage reduzierten Kohlenstoffgehalt auf. Weiterhin weist das Karosseriebauteil eine Zugfestigkeit Rm größer 1300 Megapascal sowie einen Biegewinkel gemäß Plättchenbiegeversuch nach VDA 238-100 auf, der größer als 65 Grad bei einer Blechstärke kleiner gleich 1,5 Millimeter ist, größer als 55 Grad bei einer Blechstärke zwischen 1,5 und 2,5 Millimeter ist, und größer als 50 Grad bei einer Blechstärke größer gleich 2,5 Millimeter ist.

Die Erfinder gelangten zu der Erkenntnis, dass beim Erwärmen mit besonders hoher Aufheizrate, nachfolgend auch Schnellerwärmen genannt, für das Formhärten die Sprödheit stärker zunimmt als beim konventionellen Erwärmen über mehrere Minuten in einem Durchlaufofen. Gleichzeitig lässt sich die Zugfestigkeit steigern. Das soll im Rahmen der Erfindung durch ein Manganstahlblech beim Formhärten, welches eine Außenlage mit reduziertem Kohlenstoffgehalt und damit in den bei einem Fahrzeugcrash besonders sensiblen Randbereichen eine höhere Duktilität aufweist, verbessert werden.

Somit wird erreicht, dass zum einen die Rissfreiheit in der Nutzungszeit, das heißt vor während und nach dem Einbau des Karosseriebauteils in ein Kraftfahrzeug gewährleistet ist. Ebenso ist die Bruchdehnung im Vergleich zu konventionellen, monolithischen Karosseriebauteilen aus Manganstahlblech nahezu unverändert oder sogar leicht erhöht, da der Beitrag der Außenlagen im Zugversuch vernachlässigbar ist, solange die Rissfreiheit gewährleistet ist. Durch die duktileren Außenlagen ist es möglich, dass die Bruchdehnung relativ betrachtet um bis zu 5 Prozent größer ist als bei monolithischen, konventionellen Manganstahlblechen. Dies liegt an erst später einsetzenden Rissen, die anders als bei konventionellen Manganstahlblech nicht mehr ausschließlich von der Außenseite initiiert werden.

Im Rahmen der Erfindung weist die Hauptlage einen Kohlenstoffgehalt von 0,15 bis 0,40 auf, wobei die Hauptlage "im Wesentlichen von einer Behandlung der Randlage des Manganstahlblechs unbeeinflusst ist. "Im Wesentlichen" bedeutet erfindungsgemäß, dass ein leichter, prozessbedingter Abfall des Kohlenstoffanteils in der Hauptlage zur Außenlage hin möglich ist. Dagegen ist die Außenlage bis zu einer Lagendicke von 10 bis 100 µm durch eine entkohlende Behandlung soweit beeinflusst, dass sich ein Abfall des Kohlenstoffgehalts um mindestens 10 Prozent zur Hauptlage ergibt. Das bedeutet, dass erfindungsgemäß die Außenlage aus dem gleichen Stahlwerkstoff gebildet ist, welcher lediglich in deren Kohlenstoffgehalt durch eine geeignete Vorbehandlung reduziert ist. Die Lagendicke wird von der Oberfläche des Karosseriebauteils aus im Querschnitt in Richtung Basislage gemessen.

Als Manganstahlblech eignet sich beispielsweise ein Stahl der Güte 22MnB5 oder 37MnB5. Das Manganstahlblech weist eine Legierung auf, die neben Eisen und erzschmelzungsbedingten Verunreinigungen folgende Elemente in Gewichtsprozent umfasst:
Kohlenstoff 0,15 bis 0,4;
Silizium 0,1 bis 1,0,
Mangan 0,8 bis 2,0,
Phosphor und Schwefel maximal jeweils 0,05;
Aluminium maximal 0,15;
Chrom 0,05 bis 0,5,
Titan 0,05 bis 0,5 und
Bor 0,0013 und 0,0050.

Es kann vorgesehen werden, dass die Hauptlage beidseitig von einer Außenlage begrenzt ist. "Beidseitig" bezieht sich dabei auf die Fläche des Manganstahlblechs beziehungsweise des Karosseriebauteils und nicht auf eine Bauteilstirnfläche beziehungsweise seitliche Beschnittränder. Damit ergibt sich der Vorteil, dass auch bei mechanischer Beanspruchung des Karosseriebauteils in unterschiedlicher Richtung oder in unterschiedlichen Ebenen im Kraftfahrzeugbezugsystem eine Rissfreiheit im Einbauzustand gewährleistet ist. Die Außenlagen weisen dabei bevorzugt beide den gleichen Anteil an Kohlenstoff beziehungsweise den gleichen Verlauf des Kohlenstoffanteils von der Außenseite in Richtung zur Hauptlage in auf, was Prozessvorteile beim Herstellen eines randentkohlten Manganstahlblechs mit sich bringt. Beidseitig eine Außenlage aufweisende Karosseriebauteile sind besonders als energieaufnehmende, axial beanspruchte Karosseriebauteile im Lastpfad des Kraftfahrzeugs umsetzbar, beispielsweise als Längsträger im Front- oder Heck- oder Unterbodenbereich oder als Schweller.

Das Karosseriebauteil weist bevorzugt entweder eine Zugfestigkeit zwischen 1300 und 1550 MPa (einschließlich 1550 MPa) und eine Hauptlage mit einem Kohlenstoffgehalt in Gew-% kleiner 0,25 auf, wobei die Außenlage eine Lagendicke zwischen 15 und 40 µm aufweist. Damit lassen sich neben biegesteifen Karosseriebauteilen auch energieaufnehmende, axial beanspruchte Bauteile im Lastpfad des Kraftfahrzeugs umsetzen.

Es ist aber auch möglich, dass die Zugfestigkeit zwischen 1550 und 1700 Megapascal beträgt bei einer Hauptlage mit einem Kohlenstoffgehalt in Gewichtsprozent von 0,25 bis 0,35, wobei die Außenlage eine Lagendicke zwischen 15 und 40 µm aufweist.

Alternativ besonders zur maximaler Ausschöpfung des Leichtbaupotentials kann die Zugfestigkeit größer gleich 1700 Megapascal betragen bei einer Hauptlage mit Kohlenstoffgehalt in Gewichtsprozent von größer 0,35 bis 0,40. Damit wird das Leichtbaupotential maximal ausgeschöpft.

Bevorzugt weist das Karosseriebauteil einen Kohlenstoffgehalt auf, welcher in der Außenlage von mindestens 15 %, insbesondere zwischen 15 % und 25 % niedriger ist als der Kohlenstoffgehalt der Hauptlage. Damit wird eine ausreichende Duktilität im empfindlichen Rand erreicht, welche eine rissfreie Bauteilbeanspruchung selbst bei einem Fahrzeugcrash gewährleistet. Auch eine stärkere Verformung unter Energieabbau bewirkt so noch keine Risse. Gleichzeitig werden in Verbindung mit dem Schnellerwärmen Karosseriebauteile mit sehr hoher Zugfestigkeit und Bruchdehnung A zwischen 8 und 12 Prozent erreicht.

Es kann vorgesehen werden, dass der Kohlenstoffgehalt innerhalb der Außenlage im Querschnitt von einer Außenseite des Karosseriebauteils in Richtung Hauptlage zunimmt. So können zu starke Unstetigkeiten in der Duktilität sowie Kerbstellen vermieden werden. Dies kann durch einen Wärmebehandlungsprozess, insbesondere durch eine Steuerung der Abkühlung nach dem Warmwalzen des Manganstahlblechs erreicht werden.

Auf der Außenlage des Karosseriebauteils ist bevorzugt eine kathodisch abgeschiedene Lackschicht mit einer Schichtdicke zwischen 10 und 50 µm angeordnet. Diese sorgt ohne dass das Manganstahlblech vorbeschichtet worden ist für eine ausreichende Witterungsbeständigkeit im Einsatz.

Weiterhin kann vorgesehen werden, dass das Karosseriebauteil einen ersten Flächenabschnitt mit einer ersten Blechstärke aufweist, und einen zweiten Flächenabschnitt mit einer zweiten, niedrigeren Blechstärke, wobei zwischen den Flächenabschnitten entweder eine stoffschlüssige Verbindung, insbesondere eine Schweißnaht oder ein vom zweiten Flächenabschnitt zum ersten Flächenabschnitt im Querschnitt größer beziehungsweise dicker werdender Übergangsabschnitt ausgebildet ist. Im Falle von Manganstahlblechen die eine stoffschlüssige Verbindung aufweisen, können auch Stahlbleche verschiedener Stahlgüte miteinander verbunden sein. In diesem Fall kann es sich um Teil einer so genannten Tailor Welded Blank oder eines Patchbauteils handeln, umfassend ein Manganstahlblech wie oben beschrieben.

Die Blechstärken unterscheiden sich bevorzugt um wenigstens 20 Prozent. Natürlich können auch noch weitere Flächenabschnitte, mit von der Blechstärke des oder der ersten Flächenabschnitte und zweiten Flächenabschnitte verschiedenen Blechstärken ausgebildet sein, so dass beispielsweise ein mehrstufiger Blechstärkeverlauf ausgebildet ist. In diesem Fall beziehen sich die Angaben zu Zugfestigkeit und Biegewinkel auf diejenigen Flächenabschnitte, welche aus Manganstahlblech und gehärtet sind.

Die Außenlage, bevorzugt jedoch zwei die Hauptlage zwischen sich einschließende Außenlagen hat, beziehungsweise haben, beispielsweise einen Kohlenstoffgehalt von unter 0,19 Gewichtsprozent bis in eine Tiefe von 20 Mikrometer (µm), während die Mittellage einen Kohlenstoffgehalt von 0,23 Gewichtsprozent aufweist. Mithin ist der Kohlenstoffgehalt der Außenlage in diesem Beispiel um 17 Prozent niedriger als der Kohlenstoffgehalt der Mittellage, und kann beispielsweise durch eine Entkohlung der Außenlage bei der Blechmaterialherstellung eingestellt werden. Der niedrigere Kohlenstoffgehalt bewirkt in der Außenlage eine oberflächlich niedrigere Festigkeit und Härte zu Gunsten eines erhöhten Biegewinkels des gesamten Blechmaterials im gehärteten Zustand. Die Außenlage ist erfindungsgemäß über ihre Tiefe von der Bauteiloberfläche aus betrachtet beziehungsweise durch die Lagendicke der Außenlage definiert, wobei der Kohlenstoffgehalt von der Bauteiloberfläche in Richtung Mittellage abnehmend verlaufend ausgebildet sein kann. Die Zahlenangaben stellen daher einen Mittelwert des Kohlenstoffgehalts in der Außenlage dar.

Das erfindungsgemäße Verfahren zur Herstellung eines Karosseriebauteils umfasst folgende Schritte:
- Bereitstellung eines Manganstahlblechs mit einer Hauptlage mit einem Kohlenstoffgehalt in Gewichtsprozent von 0,15 bis 0,40, insbesondere 0,15 bis 0,24, und wenigstens einer Außenlage mit einer Lagendicke zwischen 15 und 100 Mikrometer mit gegenüber der Hauptlage um wenigstens 10 Prozent reduzierten Kohlenstoffgehalt,
- Erwärmen auf größer Ac3-Temperatur zum Zwecke der Austenitisierung des Manganstahlblechs in einer Erwärmungszeit von weniger als 30 Sekunden,
- Transfer des erwärmten Manganstahlblechs in ein kaltes und/oder gekühltes Formwerkzeug,
- Umformen des erwärmten Manganstahlblechs in das Formwerkzeug,
- Formhärten im gekühlten Formwerkzeug zum Karosseriebauteil, wobei beim Formhärten eine Zugfestigkeit größer 1300 Megapascal sowie ein Biegewinkel, ermittelt im Plättchenbiegeversuch nach VDA 238-100 eingestellt wird, der
   ∘ größer 65 Grad bei einer Blechstärke kleiner gleich 1,5 Millimeter, oder
   ∘ größer 55° bei einer Blechstärke zwischen 1,5 und 2,5 Millimeter, oder
   ∘ größer 50° bei einer Blechstärke größer gleich 2,5 Millimeter beträgt.

Das Manganstahlblech enthält neben Mangan zwischen 0,8 und 2,0 Gewichtsprozent als Wesentlichen zur Durchhärtung beitragenden Bestandteil Bor zwischen 0,0013 und 0,005 Gewichtsprozent, wobei zur Form der Bereitstellung des Manganstahlblechs und insbesondere dessen Lagenzusammensetzung auf die Ausführung zum Karosseriebauteil verwiesen wird.

Das Erwärmen auf größer der Austenitisierungstemperatur Ac3 erfolgt abhängig von der genauen Zusammensetzung der verwendeten Stahllegierung. Das Erwärmen kann homogen über die gesamte Fläche bzw. über alle Flächenabschnitte des Manganstahlblechs erfolgen. Es ist aber auch möglich, dass verschiedene Flächenabschnitte unterschiedlich stark erwärmt werden, so dass nicht jeder Flächenabschnitt anschließend gehärtet wird. Erfindungswesentlich ist, dass das Manganstahlblech so schnell wie möglich innerhalb von 30 Sekunden auf größer Ac3 erwärmt wird, mithin durch Schnellerwärmung.

Anschließend erfolgt ein bevorzugt sehr schneller Transfer insbesondere innerhalb von maximal 5 Sekunden in das Formwerkzeug, wo das Warmumformen sowie auch das Formhärten stattfindet. Das Formhärten wird bevorzugt im Formwerkzeug beendet. Das Formwerkzeug ist aktiv auf etwa 10 bis 50 °C gekühlt. Alternativ ist es möglich, dass das Formhärten erst in einer nachfolgenden Werkzeugstufe beendet und insbesondere auf eine Temperatur unterhalb von 250 °C abgekühlt wird.

Die Erfinder haben herausgefunden, dass beim Schnellerwärmung von beschichteten aber auch von unbeschichteten Manganstahlblech die Duktilität nach dem Formhärten schlecht ist gegenüber konventioneller Erwärmung über mehrere Minuten. Damit geht unter Umständen eine Bruchgefahr beim Einbau, während des Betriebs des Kraftfahrzeugs, spätestens aber beim Crash einher. Durch das Schnellerwärmen wird allerdings die Feinkörnigkeit des Gefüges derart erhöht, dass die Zugfestigkeit, Streckgrenze und Bruchdehnung des Bauteils gegenüber konventionellen Erwärmungsmethoden steigt.

Die erfindungsgemäße Lösung sieht vor, dass zumindest eine beim Crash am stärksten auf Zug beanspruchte Außenlage einen reduzierten Kohlenstoffgehalt aufweisen sollte. Bevorzugt und besonders wirtschaftlich herstellbar sind zwei Außenlagen ausgebildet, die die Hauptlage beidseitig nach außen begrenzen. Damit ist es möglich, Karosseriebauteile herzustellen, welche Aufprallenergie unter gezielter Faltenbildung abbauen, beispielsweise Längsträger, Schweller, Crashboxen. Auch können Bauteile geschaffen werden, welche von beiden Außenseiten aus auf Druck oder Zug beansprucht werden und bis zu einem gewissen Maß verformbar sein sollen.

In einer bevorzugten Ausgestaltung wird das Manganstahlblech unbeschichtet bereitgestellt. Das hat den Vorteil, dass es direkt einer Schnellerwärmung zugeführt werden kann ohne vorherige Wärmebehandlungsschritte.

Das Erwärmen beziehungsweise Schnellerwärmen wird durch Kontakt des Manganstahlblechs mit einer beheizten oder heißen Kontaktplatte durchgeführt. Dabei wird die Kontaktplatte an das Manganstahlblech herangeführt und durch direkten Kontakt sowie optionaler Wärmestrahlung von der Kontaktplatte erfolgt der Wärmeeintrag. Besonders bevorzugt wird die Kontaktplatte oder mehrere Kontaktplatten unter Druck auf das Manganstahlblech aufgebracht. Es ist je nach Blechstärke, Starttemperatur und geforderter Erwärmungszeit ein einseitiges oder beidseitiges Erwärmen mittels der Kontaktplatten möglich.

Das Erwärmen des Manganstahlblechs wird wenigstens abschnittsweise von Umgebungstemperatur auf größer der Ac3-Temperatur in weniger als 30 Sekunden, bevorzugt in weniger als 20 Sekunden, am bevorzugtesten in 5 bis 10 Sekunden durchgeführt. Dazu kann beispielsweise eine Plattentemperatur größer 1100°C eingestellt werden.

Das Umformen und Formhärten wird dabei in einem gekühlten Formwerkzeug durchgeführt. Die Härtezeit für das Umformen und Formhärten im Formwerkzeug beträgt weniger als 20 Sekunden, insbesondere weniger als 10 Sekunden.

Es kann vorgesehen werden, dass die Erwärmungszeit im Wesentlichen der Härtezeit entspricht. Somit wird ein verketteter Produktionsablauf von Erwärmen und Formhärten, insbesondere in einer einzigen Presse, zumindest aber in einer eng zusammen angeordneten Produktionslinie, möglich. So kann beispielweise das Erwärmen in einer Heizvorrichtung unmittelbar neben der Presse mit dem Formwerkzeug angeordnet werden. Heizvorrichtung und Formwerkzeug werden bevorzugt über ein gemeinsames Transfersystem verbunden und mit dem Manganstahlblech beschickt und/oder über eine übergeordnete Steuerung gesteuert.

Weitere Vorteile und Merkmale der Erfindung werden im Folgenden anhand schematischer Zeichnungen verschiedener Ausführungsbeispiele beschrieben.

Es zeigen:
- Figur 1: ein Karosseriebauteil in einer Draufsicht,
- Figur 2: ein Querschnitt durch ein Karosseriebauteil,
- Figur 3: ein Querschnitt durch ein Karosseriebauteil,
- Figur 4: ein Querschnitt durch ein Karosseriebauteil,
- Figur 5: ein Diagramm zum Kohlenstoffgehalt im Querschnitt des Karosseriebauteil und
- Figur 6: eine erfindungsgemäße Verfahrensabfolge in einer Presse.

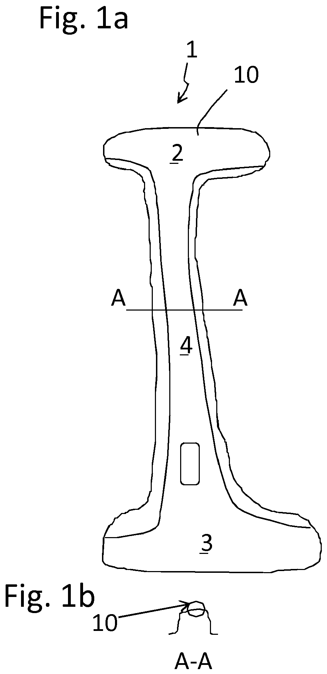

Figur 1 zeigt ein Karosseriebauteil 1 am Beispiel einer B-Säule 1, wobei Figur 1a eine schematische Draufsicht sowie Figur 1b einen Ausschnitt AA zeigen.

Die B-Säule aus einem Manganstahlblech 10 weist einen Kopfbereich 2 zur Anbindung an ein Fahrzeugdach, einen Fußbereich 3 zur Anbindung an einen Fahrzeugschweller sowie einen Mittelbereich 4 auf. Der Mittelbereich 4 weist, wie im Schnitt A-A gezeigt, einen U-förmigen Querschnitt auf.

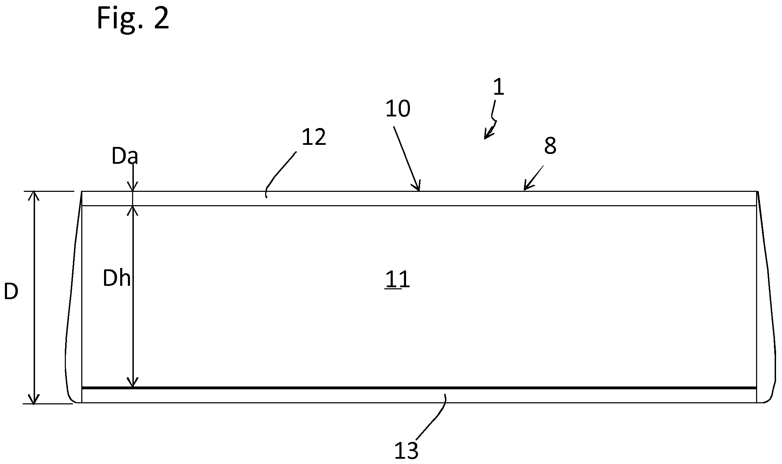

Der im Schnitt A-A gemäß Figur 1b gezeigte Ausschnitt ist in Figur 2 vergrößert dargestellt.

Figur 2 zeigt eine Hauptlage 11 sowie zwei die Hauptlage 11 nach außen begrenzende Außenlagen 12, 13 des Manganstahlblechs 10. Die Außenlagen 12, 13 weisen in diesem Ausführungsbeispiel die gleiche Lagendicke Da auf, die Hauptlage 11 die Lagendicke Dh. Von einer in der Bildebene oberen Außenseite 8 verläuft der Kohlenstoffgehalt in der Außenlage 12 in Richtung Hauptlage zunehmend. Da Manganstahlblech besitzt eine einheitliche Blechstärke D im Gegensatz zur nachfolgenden Ausführungsform.

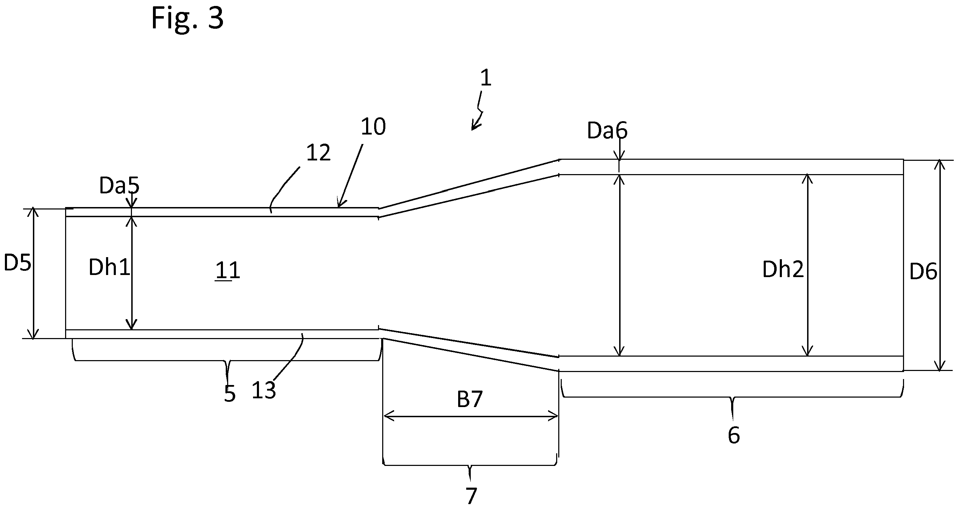

Figur 3 zeigt eine alternative Ausführungsform eines Karosseriebauteil 1 im Querschnitt.

Das Bauteil weist eines ersten Flächenabschnitt 5 mit der Blechstärke D5 sowie einen zweiten Flächenabschnitt 6 mit der Blechstärke D6 auf, wobei zwischen den Flächenabschnitten ein schräg verlaufender Übergangabschnitt 7 mit der Breite B7 ausgebildet ist. Zwei Außenlagen 12 und 13 begrenzen die Hauptlage 11 in allen Flächenabschnitten, wobei die Lagendicken Da der Außenlagen 12, 13 in dieser Ausführungsform sich in den Flächenabschnitten voneinander unterscheiden.

So weist der erste Flächenabschnitt 5 eine Außenlage 12 mit einer Lagendicke Da5 auf, welcher kleiner als die Lagendicke Da6 im zweiten Flächenabschnitt 6 ist. Die Lagendicke im Übergangsabschnitt 7 verläuft monoton steigend vom ersten Flächenabschnitt 5 ausgehend mit der Lagendicke Da5 bis zum zweiten Flächenabschnitt 6 mit der Lagendicke Da6. Auch die Hauptlage 11 weist eine größere Lagendicke Dh5 im ersten Flächenabschnitt 5 auf im Vergleich zur Lagendicke Dh6 des zweiten Flächenabschnitts 6. Zur Herstellung des Manganstahlblechs 10 in dieser Ausführungsform wird ein unterschiedlich starkes Abwalzen als Kaltwalzen nach dem Entkohlen der Außenlage durchgeführt.

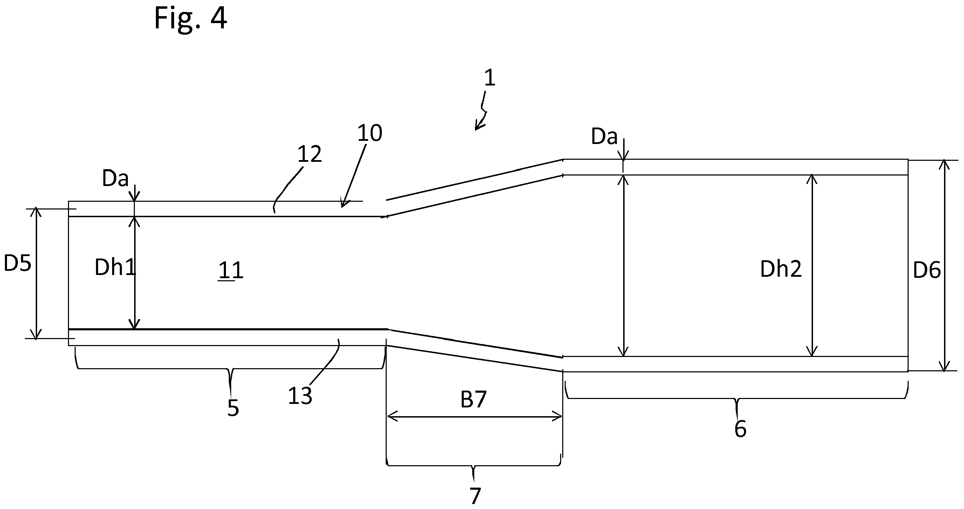

Figur 4 zeigt eine Ausführungsform, die sich zu derjenigen in Figur 3 dadurch unterscheidet, dass die Außenlagen 12, 13 eine einheitliche Lagendicke Da über alle Flächenabschnitte 5, 6, 7 aufweisen. Die kann dadurch erreicht werden, dass eine Wärmebehandlung zum Entkohlung erst nach einem lokal unterschiedlich starken Abwalzen durchgeführt wird, oder die Entkohlung während eines geregelten Abkühlens nach dem lokal unterschiedlich starken als Warmwalzen durchgeführten Abwalzen.

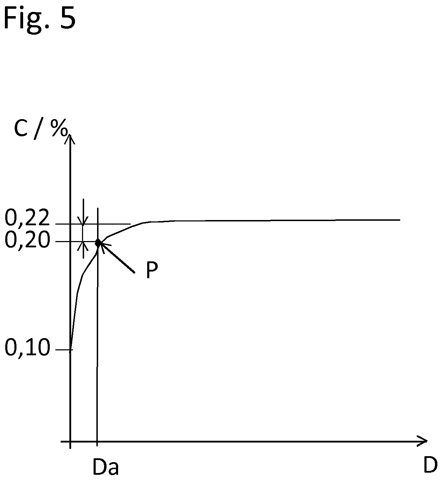

Figur 5 zeigt für ein Manganstahlblech der Güte 37MnB5 in einem kartesischen Koordinatensystem schematisch aufgetragen den Kohlenstoffgehalt auf der Ordinatenachse von einer Außenseite des Karosseriebauteils ausgehend im Querschnitt in Richtung der Hauptlage. Auf der Abszissenachse aufgetragen ist die Dicke der Lage beziehungsweise die Blechstärke D von der Außenseite des Karosseriebauteils ausgehend.

Erkennbar ist der zur Hauptlage 11 hin zunehmende Gehalt an Kohlenstoff bis zu einer Dicke D, die der Lagendicke Da einer der Außenlagen entspricht, und wo der Kohlenstoffgehalt 0,20 beträgt. Der Kohlenstoffgehalt beträgt an diesem Punkt P etwa 10 Prozent weniger als der Kohlstoffgehalt von knapp 0,22 der Hauptlage 11. Die Außenlage weist an der Außenseite einen geringsten Kohlenstoffgehalt, in diesem Ausführungsbeispiel 0,10 Prozent, auf.

Der prinzipielle Verlauf des Kohlenstoffgehalts ändert sich bei Verwendung anderen Manganstahl-Güten nicht wesentlich, lediglich die absoluten Zahlenangaben aus Figur 5 würden im Falle niedriger kohlenstofflegierten Güten wie z.B. 22MnB5 auch entsprechend niedriger werden.

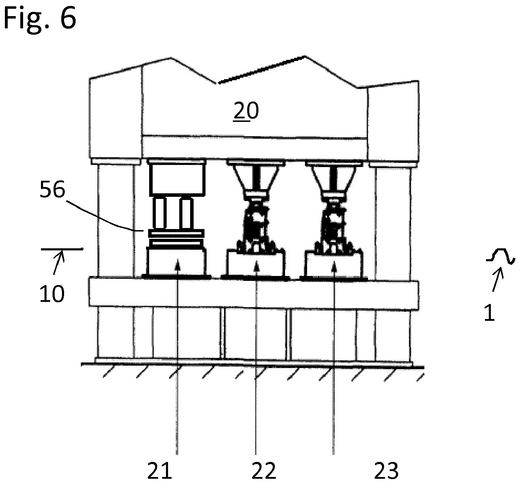

Figur 6 zeigt, dass das erfindungsgemäße Verfahren in einer Produktionslinie verkettet durchgeführt werden kann am Beispiel einer mehrstufigen Presse 20.

Das Erwärmen eines bereitgestellten Manganstahlblechs 10 erfolgt als Schnellerwärmen, beispielsweise mit ein oder mehreren beheizten oder heißen Kontaktplatten 21 oder Induktoren beispielsweise als Flächeninduktoren. Anschließend erfolgt ein Transfer in ein Formwerkzeug 22 zum Umformen und Formhärten des erwärmten Manganstahlblechs 10. Im Falle besonders kurzer Taktzeiten der Presse von insbesondere weniger als 10 Sekunden kann ein weiteres gekühltes Formwerkzeug oder ein Kühlwerkzeug 23 vorgesehen werden, so dass das geformte Bauteil auf weniger als 250 °C weiter abgekühlt und formgehärtet wird. Dies kann wie in Figur 6 gezeigt durch einen gemeinsamen Pressenantrieb erfolgen. Andernfalls oder im Fall niedriger Blechstärken < 2,5 mm, insbesondere < 1,5 mm kann auch bereits im Formwerkzeug 22 das Formhärten beendet und auf eine Temperatur unterhalb 250°C gekühlt werden.

Es ist anstelle einer mehrstufigen Presse 20 auch möglich, dass das Erwärmen in einer separaten Vorrichtung vor einer kleineren Presse zum Umformen und Formhärten durchgeführt wird.

Bevorzugt ist, dass in beiden Fällen ein einziges lineares Transfersystem (nicht gezeigt) das Manganstahlblech 10 zum Erwärmen, Umformen und Formhärten transferiert wird und die Transferzeit weniger als 5 Sekunden, insbesondere 2 bis 4 Sekunden beträgt.

### Bezugszeichen:

- 1 -: Karosseriebauteil
- 2 -: Kopfbereich
- 3 -: Fußbereich
- 4 -: Mittelbereich
- 5 -: erster Flächenabschnitt
- 6 -: zweiter Flächenabschnitt
- 7 -: Übergangsabschnitt
- 8 -: Außenseite zu 1
- 10 -: Manganstahlblech
- 11 -: Hauptlage
- 12 -: Außenlage
- 13 -: Außenlage
- 20 -: Presse
- 21 -: Kontaktplatten
- 22 -: Formwerkzeug
- 23 -: Kühlwerkzeug

- D -: Blechstärke
- D6 -: Blechstärke
- Da -: Lagendicke
- Da5 -: Lagendicke
- Da6 -: Lagendicke
- Dh -: Lagendicke zu 11
- P -: Punkt

## Patentansprüche

1. Verfahren zur Herstellung eines Karosseriebauteils (1) aus Manganstahlblech umfassend die Schritte:
• Bereitstellung eines Manganstahlblechs (10) aus einer Legierung, die neben Eisen und erschmelzungsbedingten Verunreinigungen folgende Elemente in Gew.-% umfasst:
Kohlenstoff 0,15 bis 0,4
Silizium 0,1 bis 1,0
Mangan 0,8 bis 2,0
Phosphor und Schwefel maximal jeweils 0,05
Aluminium maximal 0,15
Chrom 0,05 bis 0,5
Titan 0,05 bis 0,5 und
Bor 0,0013 und 0,0050
und das Manganstahlblech (10) eine Hauptlage (11) und wenigstens eine Außenlage (12, 13) aus dem gleichen Stahlwerkstoff aufweist,
wobei die Hauptlage (11) einen C-Gehalt in Gew.-% von 0,15 bis 0,4 aufweist und die Außenlage (12, 13) eine Lagendicke (Da) zwischen 10 µm und 100 µm sowie einen gegenüber der Hauptlage (11) um wenigstens 10 % reduzierten C-Gehalt aufweist,
• Erwärmen auf größer als die Ac3-Temperatur zum Zwecke der Austenitisierung des Manganstahlblechs (10) in einer Erwärmungszeit von weniger als 30 Sekunden,
• Transfer des erwärmten Manganstahlblechs (10) in ein kaltes und/oder gekühltes Formwerkzeug (22),
• Umformen des erwärmten Manganstahlblechs (10) in dem Formwerkzeug (22),
• Formhärten im gekühlten Formwerkzeug (22) zum Karosseriebauteil (1), wobei beim Formhärten eine Rm > 1300 MPa sowie ein Biegewinkel gemäß Plättchenbiegeversuch nach VDA 238-100 eingestellt wird, der > 65° bei einer Blechstärke <=1,5 mm, > 55° bei einer Blechstärke zwischen 1,5 mm und 2,5 mm und > 50° bei einer Blechstärke >=2,5 mm beträgt.

2. Verfahren nach Anspruch 1, **dadurch gekennzeichnet, dass** das Manganstahlblech (10) unbeschichtet bereitgestellt wird.

3. Verfahren nach Anspruch 1 oder 2, **dadurch gekennzeichnet, dass** das Erwärmen durch Kontakt des Manganstahlblechs (10) mit einer beheizten oder heißen Kontaktplatte durchgeführt wird.

4. Verfahren nach Anspruch einem der Ansprüche 1 bis 3, **dadurch gekennzeichnet, dass** das Erwärmen des Manganstahlblechs (10) wenigstens abschnittsweise von Umgebungstemperatur auf größer der Ac3-Temperatur in weniger als 20 Sekunden, bevorzugt in 5 bis 10 Sekunden durchgeführt wird.

5. Verfahren nach einem der Ansprüche 1 bis 4, **dadurch gekennzeichnet, dass** das Umformen und Formhärten in einem gekühlten Formwerkzeug (22) in einer Härtezeit innerhalb von weniger als 20 Sekunden, insbesondere weniger als 10 Sekunden durchgeführt wird.

6. Verfahren nach Anspruch einem der Ansprüche 1 bis 5, **dadurch gekennzeichnet, dass** die Erwärmungszeit der Härtezeit für das Umformen und Formhärten entspricht.

## Claims

1. Method for producing a bodywork component (1) from manganese steel sheet, comprising the steps of:
• providing a manganese steel sheet (10) made of an alloy which comprises, in addition to iron and impurities from melting, the following elements in wt.%:
carbon 0.15 to 0.4
silicon 0.1 to 1.0
manganese 0.8 to 2.0
phosphorus and sulphur maximum 0.05 each
aluminium maximum 0.15
chromium 0.05 to 0.5
titanium 0.05 to 0.5 and
boron 0.0013 and 0.0050
and the manganese steel sheet (10) has a main layer (11) and at least one outer layer (12, 13) made of the same steel material, wherein the main layer (11) has a C content in wt.% of 0.15 to 0.4 and the outer layer (12, 13) has a layer thickness (Da) between 15 µm and 100 µm and a C content which is at least 10% lower than that of the main layer (11),
• heating to higher than the Ac3 temperature for the purpose of austenitising the manganese steel sheet (10) in a heating time of less than 30 seconds,
• transferring the heated manganese steel sheet (10) into a cold and/or cooled mould (22),
• forming the heated manganese steel sheet (10) in the mould (22),
• press hardening in the cooled mould (22) to create the bodywork component (1), wherein, during the press hardening, an Rm > 1300 MPa is set and a bending angle is set according to the plate bending test in accordance with VDA 238-100 which is > 65° for a sheet thickness <= 1.5 mm, > 55° for a sheet thickness between 1.5 mm and 2.5 mm and > 50° for a sheet thickness >= 2.5 mm.

2. Method according to claim 1, **characterised in that** the manganese steel sheet (10) is provided uncoated.

3. Method according to claim 1 or 2, **characterised in that** the heating is carried out by means of contact of the manganese steel sheet (10) with a heated or hot contact plate.

4. Method according to any of claims 1 to 3, **characterised in that** the heating of the manganese steel sheet (10) is carried out at least partially from ambient temperature to higher than the Ac3 temperature in less than 20 seconds, preferably in 5 to 10 seconds.

5. Method according to any of claims 1 to 4, **characterised in that** the forming and press hardening are carried out in a cooled mould (22) in a hardening time of less than 20 seconds, in particular less than 10 seconds.

6. Method according to any one of claims 1 to 5, **characterised in that** the heating time is equivalent to the hardening time for forming and press hardening.

## Revendications

1. Procédé de fabrication d'un élément de carrosserie (1) en tôle d'acier au manganèse comprenant les étapes suivantes :
• mise à disposition d'une tôle d'acier au manganèse (10) en un alliage qui comprend outre du fer et des impuretés liées à la fusion, les éléments suivants en % en poids :
0,15 à 0,4 de carbone
0,1 à 1,0 de silicium
0,8 à 2,0 de manganèse
au maximum respectivement 0,05 de phosphore et de soufre
au maximum 0,15 d'aluminium
0,05 à 0,5 de chrome
0,05 à 0,5 de titane et
0,0013 et 0,0050 de bore
et la tôle d'acier au manganèse (10) présente une couche principale (11) et au moins une couche extérieure (12, 13) du même matériau en acier, dans lequel la couche principale (11) présente une teneur en C en % en poids de 0,15 à 0,4 et la couche extérieure (12, 13) présente une épaisseur de couche (Da) entre 10 µm et 100 µm ainsi qu'une teneur en C réduite d'au moins 10 % par rapport à la couche principale (11),
• chauffage à une température supérieure à la température Ac3 aux fins de l'austénitisation de la tôle d'acier au manganèse (10) en un temps de chauffage de moins de 30 secondes,
• transfert de la tôle d'acier au manganèse (10) chauffée dans un outil de moulage (22) froid et/ou refroidi,
• mise en forme de la tôle d'acier au manganèse (10) chauffée dans l'outil de moulage (22),
• moulage par durcissage dans l'outil de moulage (22) refroidi pour obtenir l'élément de carrosserie (1), dans lequel lors du moulage par durcissage, une valeur Rm est réglée à > 1300 MPa et un angle de courbure selon l'essai de courbure d'une plaque d'après VDA est réglé à 238-100, qui est de > 65° à une résistance de tôle <=1,5 mm, > 55° à une résistance de tôle entre 1,5 mm et 2,5 mm et > 50° à une résistance de tôle >=2,5 mm.

2. Procédé selon la revendication 1, **caractérisé en ce que** la tôle d'acier au manganèse (10) est mise à disposition sans revêtement.

3. Procédé selon la revendication 1 ou 2, **caractérisé en ce que** le chauffage est réalisé par contact de la tôle d'acier au manganèse (10) avec une plaque de contact chauffée ou chaude.

4. Procédé selon l'une quelconque des revendications 1 à 3, **caractérisé en ce que** le chauffage de la tôle d'acier au manganèse (10) est réalisé au moins par endroit à une température ambiante supérieure à la température Ac3 en moins de 20 secondes, de préférence en 5 à 10 secondes.

5. Procédé selon l'une quelconque des revendications 1 à 4, **caractérisé en ce que** la mise en forme et le moulage par durcissage dans un outil de moulage refroidi (22) sont réalisés en un temps de durcissage dans une plage de moins de 20 secondes, en particulier de moins de 10 secondes.

6. Procédé selon l'une quelconque des revendications 1 à 5, **caractérisé en ce que** le temps de chauffage correspond au temps de durcissage pour la mise en forme et le moulage par durcissage.
